# EUROPÄISCHE PATENTSCHRIFT

(11) **EP 1 656 265 B1**
(45) Veröffentlichungstag und Bekanntmachung des Hinweises auf die Patenterteilung: **26.11.2008**
(21) Anmeldenummer: 04762695.7
(22) Anmeldetag: 19.08.2004
(51) Int. Cl.: B60G 7/00, B60G 17/015

(54) **KUGELGELENK MIT WINKELSENSOR**
BALL-AND-SOCKET JOINT WITH AN ANGLE SENSOR
JOINT A ROTULE A DETECTEUR D'ANGLE

(30) Priorität: 22.08.2003 DE 10339126
(43) Veröffentlichungstag der Anmeldung: 17.05.2006
(73) Patentinhaber: ZF FRIEDRICHSHAFEN Aktiengesellschaft, 88038 Friedrichshafen (DE); Sensitec Gmbh, 36633 Lahnau (DE)
(72) Erfinder: SPRATTE, Joachim, 49090 Osnabrück (DE); LOREIT, Uwe, 35580 Wetzlar (DE)
(86) Internationale Anmeldenummer: PCT/DE2004/001855
(87) Internationale Veröffentlichungsnummer: WO 2005/021295

(56) Entgegenhaltungen:
- EP-A- 0 617 260
- DE-C- 10 110 738

## Beschreibung

Die Erfindung betrifft ein Kugelgelenk mit integriertem Winkelsensor, insbesondere zur Verwendung als Fahrzeugniveaugeber im Fahrwerk eines Kraftfahrzeuges.

Ein Kugelgelenk als Fahrzeugniveaugeber zur berührungslosen und kontinuierlichen Messung der Lageänderungen der Kraftfahrzeugkarosserie in Fahrwerken von Kraftfahrzeugen einzusetzen, wobei das Kugelgelenkgehäuse und der Kugelzapfen zwischen dem Fahrzeugchassis und der Radaufhängung angeordnet werden, ist aus der EP 617 260 A1 bekannt. In der Schrift wird vorgeschlagen, die von dem Fahrzeugniveaugeber gewonnenen Informationen zur Leuchtweiten- und/oder zur Fahrzeugniveauregulierung zu nutzten.

Das Kugelgelenk weist einen an der Gelenkkugel des Kugelzapfens angeordneten, zweipoligen Feldgeber und einen an dem Kugelgelenkgehäuse im Einflußbereich des Feldgebers angeordneten magnetoresistiven Sensor auf. Der Sensor soll hierbei die Lage des Kugelzapfens bzw. eine Änderung dieser, bei der sich die Position des Feldgebers zum Sensor und somit das magnetische Feld am Ort des Sensors ändert, möglichst genau über das detektierte Feld erfassen. Hierfür wird vorgeschlagen, Sensor und Feldgeber sich einander gegenüberliegend in der Gelenkkugel und dem Kugelgelenkgehäuse anzuordnen, damit die erzeugten Meßsignale die tatsächlichen Lageänderungen der Kraftfahrzeugkarosserie wiedergeben, ohne daß hierbei die im Achsbereich eines Fahrzeugs auftretenden räumlichen Bewegungen stören.

Bei diesem Kugelzapfen sind jedoch mit dem einen Sensor hinsichtlich der Genauigkeit, keine für das Kraftfahrzeug ausreichende Meßergebnisse zu erwarten, da der Sensor nur eine Bewegungsrichtung (Freiheitsgrad) des Kugelzapfens messen kann und die anderen zwei Freiheitsgrade mittels elektronischer Auswertung bestimmt oder ausgeschlossen werden müssen.

Zur Verbesserung der Meßgenauigkeit wird darüber hinaus in der Patentanmeldung DE 101 34 259 vorgeschlagen, zumindest zwei Feldsensoren im Kugelgelenkgehäuse einander diametral auf einer Kreisbahn im Bereich der Kugeloberfläche anzuordnen. Somit ist es mit den beiden unterschiedlichen an der Kugeloberfläche angeordneten Polen des Feldgebers möglich, zwei Freiheitsgrade des Kugelzapfens, ein Verschwenken und Verdrehen um seine Mittelachse, zu bestimmen. Zur Bestimmung der genauen räumlichen Position des Kugelzapfens gegenüber dem Kugelgelenkgehäuse in allen drei Freiheitsgraden wird vorgeschlagen, drei Feldsensoren auf der Kreisbahn im Abstand von 120° anzuordnen.

Die DE 101 10 738 C1 zeigt ein Kugelgelenk mit einem in einem Kugelgelenkgehäuse gelagerten Kugelzapfen, einem an der Gelenkkugel des Kugelzapfens angeordneten zweipoligen Feldgeber und zumindest einem an dem Kugelgelenkgehäuse angeordneten Magnetfeldrichtungssensor, der mit dem von dem Feldgeber erzeugten Magnetfeld in Wechselwirkung steht, wobei nur ein Pol des zweipoligen Feldgebers an der Kugeloberfläche angeordnet ist. Der Feldgeber ist dabei in jedem Fall direkt in der Gelenkkugel aufgenommen.

Aufgabe der Erfindung ist es, ein Kugelgelenk zu schaffen, bei welchem die Auslenkung des Kugelzapfes im Kugelgelenkgehäuse mit großer Genauigkeit bei der Verwendung von nur wenigen Sensoren erfaßt werden kann.

Diese Aufgabe wird mit den Merkmalen des Anspruchs 1 gelöst. Ausgestaltungen sind in den Unteransprüchen beschrieben. Somit weist das Kugelgelenk einen in dem Kugelgelenkgehäuse gelagerten Kugelzapfen, einen an der Gelenkkugel des Kugelzapfens angeordneten zweipoligen Feldgeber und zumindest einen an dem Kugelgelenkgehäuse angeordneten Magnetfeldrichtungssensor auf, der mit dem von dem Feldgeber erzeugten Feld in Wechselwirkung steht, wobei nur ein Pol des Feldgebers an der Kugeloberfläche angeordnet ist. Durch die Anordnung des einen Pols des Feldgebers an der Kugeloberfläche ergibt sich, im Gegensatz zu einer Anordnung, bei der beide Pole an der Kugeloberfläche angeordnet sind, ein strahlenförmiges Magnetfeld im Erfassungsbereich des Magnetfeldrichtungssensors. Dies erlaubt bereits eine genaue Bestimmung der Auslenkung des Kugelzapfens in einer Schwenkachse mit nur einem Sensor. Die Beeinträchtigung der Gestaltung der Kugelkopfoberfläche durch den eingebrachten Feldgeber ist sehr gering.

Der Feldgeber ist erfindungsgemäß in dem Kugelkopf in einer Schicht aus nicht magnetischen Material eingebettet, so daß die Gelenkkugel zur Übertragung hoher Gelenkkräfte aus Metall gefertigt werden kann. Eine magnetische Ankopplung des innenliegenden Pols des Feldgebers an die metallische Gelenkkugel verbessert die Gestaltung des Magnetfeldes im Erfassungsbereich des Magnetfeldrichtungssensors.

Wird der Feldgeber, z. B. ein Stabmagnet, in der Symmetrieachse des Kugelzapfens angeordnet, können Drehbewegungen des Kugelzapfens um seine Symmetrieachse in jeder Auslenkposition die Messung der Auslenkung des Kugelzapfens nicht beeinflussen, da aufgrund des strahlenförmigen Magnetfeldes bei jeder Drehung die Richtung des Magnetfeldes am Ort des Sensors nahezu gleich bleibt. Dies ist besonders vorteilhaft bei der Bestimmung der Niveaulage von Fahrzeugen über die Bewegung der Radaufhängung, da hier die Messung verfälschende und durch Lenkbewegung hervorgerufene Drehbewegung des Kugelkopfes um seine Symmetrieachse ausgeblendet werden.

Die Verwendung von zumindest zwei Magnetfeldrichtungssensoren, die mit dem von dem Magnetfeldgeber erzeugten Feld in Wechselwirkung stehen und deren Bezugsachsen nicht parallel zueinander verlaufen, ermöglicht die Erfassung der Auslenkung des Kugelzapfens in jeder Richtung.

Zur einfachen Montage sind die Magnetfeldrichtungssensoren auf einer Platte, zum Beispiel an einem Verschlußdeckel des Kugelgelenkgehäuses, angebracht. Für eine effektive Fassung der Auslegung des Kugelzapfens werden die Sensoren in einem Winkel von 90° zueinander auf der Platte und die Platte selbst senkrecht zur Mittelachse des Kugelzapfens angeordnet. Durch diese Anordnung ist es möglich, eine Kippung des Kugelzapfens entlang der zwei Freiheitsgrade mit nur einer Maßverkörperung, dem Feldgeber, zu bestimmen.

Die vorliegende Erfindung wird nachfolgend unter Bezug auf die beigefügten Zeichnungen näher erläutert. Es zeigen:
- Fig. 1: einen Teilschnitt eines Ausführungsbeispiels des erfindungsgemäßen Kugelgelenks,
- Fig.2: eine in dem Kugelgelenkgehäuse des in Fig. 1 gezeigten Kugelgelenks integrierte Platte mit zwei Magnetfeldrichtungssensoren,
- Fig. 3: einen Schnitt eines Kugelzapfens mit entsprechenden Feldlinienverlauf gemäß einem Ausführungsbeispiel der Erfindung und
- Fig. 4: einen Schnitt eines weiteren Ausführungsbeispiels des erfmdungsgemäßen Kugelgelenks.

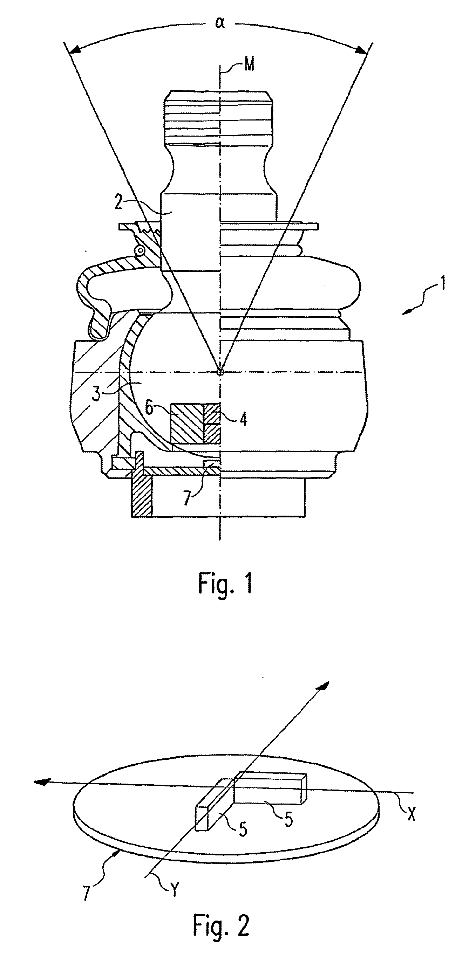

Das in Fig. 1 in einem Teilschnitt gezeigte Kugelgelenk besteht aus einem Kugelgelenkgehäuse 1 und einem mit seiner Gelenkkugel 3 in dem Kugelgelenkgehäuse 1 gelagerten Kugelzapfen 2. Das Kugelgelenk soll als Fahrzeugniveaugeber, dessen Signale bspw. zur statischen oder dynamischen Leuchtweiten- und/oder Fahrzeugniveauregelung nutzbar sind, in dem Fahrwerk eines Fahrzeuges eingesetzt werden, wobei entweder das Kugelgelenkgehäuse 1 oder der Kugelzapfen 2 mit der Radaufhängung und der Kugelzapfen 2 bzw. das Kugelgelenkgehäuse 1 mit dem Chassis des Fahrzeuges verbunden wird.

Die Anordnung des Kugelgelenks zwischen der Radaufhängung und dem Chassis erfolgt hierbei so, daß bei einer Lageänderung der Fahrzeugkarosserie gegenüber der Radaufhängung der Kugelzapfen 2 in dem Kugelgelenkgehäuse 1 eine Auslenkung erfährt, die die Lageänderung der Fahrzeugkarosserie gegenüber der Straße gut abbildet.

Zur Erfassung der Auslenkung des Kugelzapfens 2 in dem Kugelgelenkgehäuse 1 ist in der Gelenkkugel 3 des Kugelzapfens 2 als Feldgeber 4 ein Stabmagnet eingelassen, der ein Magnetfeld erzeugt, das von einem oder mehreren an dem Kugelgelenkgehäuse 1 angebrachten Magnetfeldrichtungssensoren 5, wie z.B. magnetoresistive Winkelsensoren, erfaßt wird. Die maximale Auslenkung des Kugelzapfens 2 in dem Kugelgelenkgehäuse 1 ist durch den Winkel α in Fig. 1 angedeutet.

Da im Allgemeinen die höchsten Flächenpressungen im Äquatorialbereich der Gelenkkugel auftreten, ist der Feldgeber 4 im unteren Teil der Gelenkkugel eingelassen. In dem in Fig. 1 gezeigten Beispiel ist der Feldgeber in der Gelenkkugel 3 in einem Ring 6 aus nicht magnetischem Material eingebettet, was die Gestaltung der Gelenkkugel 3 aus einem ferromagnetischen Material erlaubt.

Der Feldgeber kann aus allgemein bekannten Dauermagnetwerkstoffen wie z.B. aus Alnico 500 oder Bariumferrit hergestellt sein. Bevorzugt ist er als Permanentmagnet aus Werkstoffen mit einem hohen Gütefaktor (B H)ₘₐₓ, wie z.B. SmCO₅, SM₂Co₁₇, Nd₂Fe₁₄B oder ähnlichen Werkstoffen, hergestellt.

Die Sensoren befinden sich im Kugelgelenkgehäuse 1 auf einer Platte 7, z.B. einer Leiterplatte.

Fig. 2 zeigt die Anordnung der Magnetfeldrichtungssensoren 5 auf der Platte 7. Hierbei sind die Magnetfeldrichtungssensoren 5 mit ihren Meßbezugsachsen x, y, in einem Winkel von 90° zueinander und in einer Ebene auf der Platte 7 positioniert. Versuche haben gezeigt, daß gute Ergebnisse bei der Erfassung der Auslenkung des Kugelzapfens 2 erzielt werden, wenn die Magnetfeldrichtungssensoren 5 auf der Platte 7 nahe beieinander und die Platte 7 selbst senkrecht zur Mittelachse M des Kugelzapfens 2 angeordnet ist.

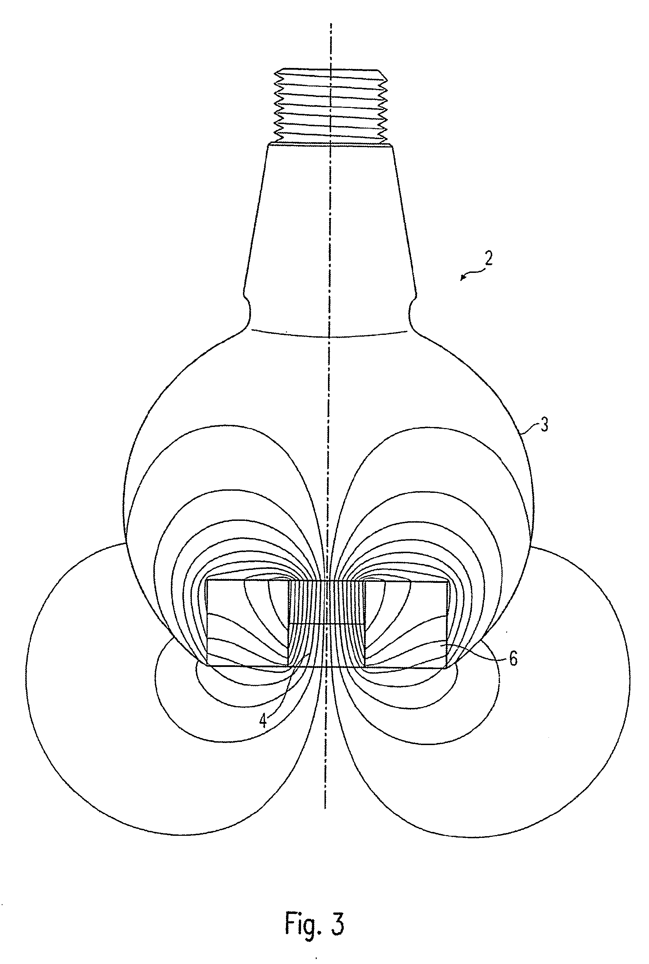

Fig. 3 zeigt den Kugelzapfen 2 in einem Schnitt mit dem entsprechenden Feldlinienverlauf gemäß einem Ausführungsbeispiel der Erfindung. Durch die Anordnung des Feldgebers 4 parallel zur Symmetrieachse des Kugelzapfens 2 und die senkrechte Anordnung der Magnetfeldrichtungssensoren 5 zum Feldgeber 4 ergibt sich im Erfassungsbereich der Sensoren ein strahlenförmiger Feldlinienverlauf.

Bei der Auslenkung des Kugelzapfens 2 in dem Kugelgelenkgehäuse ändert sich die Lage des Feldgebers 4 und somit der Feldlinienverlauf am Ort der Magnetfeldrichtungssensoren 5. Die Magnetfeldrichtungssensoren 5 erfassen zu jeder Position bzw. Auslenkung des Kugelzapfens 2 die entsprechenden Winkel des Feldlinienverlaufs an ihrem Ort. Dies ermöglicht es, die Auslenkung des Kugelzapfens 2 in dem Kugelgelenkgehäuse 1 entlang der zwei Freiheitsgrade mit nur einer Maßverkörperung, dem Feldgeber 4, zu bestimmen.

In dem in Fig. 3 gezeigten Beispiel erstreckt sich die Isolierung 6 des Feldgebers 4 auf dessen seitlichen Bereich. Der in der Gelenkkugel 3 liegende Pol des Feldgebers 4 ist dagegen mit der ferromagnetischen Gelenkkugel 3 in Kontakt. Hierdurch ergibt sich, wie in Fig. 3 gezeigt, eine Streckung des Feldlinienverlaufs, was die Erfassung von Auslenkungen des Kugelzapfens 2 durch die Magnetfeldrichtungssensoren 5 verbessert.

Durch die Anordnung des Feldgebers 4 in der Symmetrieachse des Kugelzapfens 2 können Beeinflussungen durch Drehbewegungen des Kugelzapfens 2 um seine Symmetrieachse bei der Messung eliminiert werden, da aufgrund des strahlenförmigen Magnetfeldes im Gegensatz zu einer Auslenkung des Kugelzapfens 2 die Richtung des Magnetfeldes am Ort der Sensoren bzw. der von den Sensoren erfaßte Winkel bei einer Drehung des Kugelzapfens 2 nahezu gleich ist. Solche für die Messung unerwünschten Drehbewegungen des Kugelzapfens 2 können z.B. bei Lenkbewegungen auftreten, wenn das Kugelgelenk in einer Radaufhängung als Fahrzeugniveaugeber eingesetzt wird.

Vorteilhafterweise wird beim Einsatz des Kugelgelenks als Fahrzeugniveaugeber in einer Radaufhängung eine Meßbezugsachse x eines Magnetfeldrichtungssensors 5 entlang der Veränderung der Niveaulage der Karosserie in einer Verkippung ausgerichtet, so daß die andere Meßbezugsachse y bzw. der andere Magnetfeldrichtungssensor 5 die durch die Brems- oder Beschleunigungslast auftretende Aufziehbewegung des Fahrzeugs erfaßt.

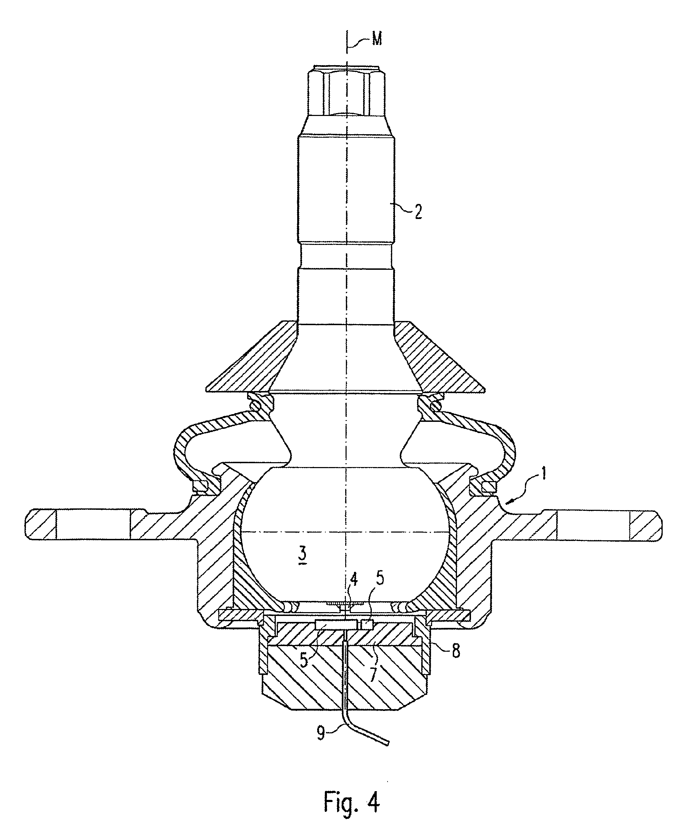

Fig. 4 zeigt in einem Schnitt ein weiteres Ausführungsbeispiel des erfindungsgemäßen Kugelgelenks. Die Sensoren sind hier für eine leichte Montage bzw. Positionierung zum Feldgeber 4 auf der Platte 7 an einem Verschlußdeckel 8 des Kugelgelenkgehäuses 1 angebracht. Das Kugelgelenkgehäuse 1 besitzt im unteren Bereich eine Öffnung, welche mit dem Verschlußdeckel 8 z.B. mittels Ultraschallschweißung oder Warmstemmen verschlossen wird. Die Magnetfeldrichtungssensoren 5 befinden sich dabei auf einer eine Leiterplatte bildenden Platte 7, die Bestandteil des Verschlußdeckels 8 ist. Nach dem Verschließen des Kugelgelenkgehäuses 1 mit dem Verschlußdeckel 8 sind die Sensoren zu dem in der Gelenkkugel 3 eingelassenen Feldgeber 4 positioniert.

Das Kugelgelenkgehäuse 1 sowie der Verschlußdeckels 8 können in an sich bekannter Weise im Spritzgussverfahren hergestellt werden, wobei hierbei das die Sensoren kontaktierende Kabel 9 durch den Verschlußdeckels 8 eingeschlossen bzw. nach Außen geführt wird, so daß gleichzeitig eine Zugentlastung und Abdichtung des Kabels 9 über den Verschlußdeckel 8 erfolgt. Die Kontaktierung des aus dem Kugelgehäuse herausgeführten Kabels 9 kann über einen Steckverbinder erfolgen.

Es ist auch möglich, das Sensormodul in dem Kugelgelenkgehäuse 1 zu montieren und eine Verbindung zwischen dem Kabel 9 und dem montierten Sensormodul beim Aufsetzen des Verschlußdeckels 8 mittels einer Streckverbindung herzustellen.

### Bezugszeichenliste

- 1: Kugelgelenkgehäuse
- 2: Kugelzapfen
- 3: Gelenkkugel
- 4: Feldgeber
- 5: Magnetfeldrichtungssensor
- 6: Ring
- 7: Platte
- 8: Verschlußdeckel
- 9: Kabel
- M: Mittelachse des Kugelzapfens.
- α: Winkel

## Patentansprüche

1. Kugelgelenk mit einem Kugelgelenkgehäuse (1), einem in dem Kugelgelenkgehäuse (1) gelagerten Kugelzapfen (2), einem an der Gelenkkugel (3) des Kugelzapfens (2) angeordneten zweipoligen Feldgeber (4) und zumindest einem an dem Kugelgelenkgehäuse (1) angeordneten Magnetfeldrichtungssensor (5), der mit dem von dem Feldgeber (4) erzeugten Magnetfeld in Wechselwirkung steht, wobei nur ein Pol des zweipoligen Feldgebers (4) an der Kugeloberfläche angeordnet ist,
**dadurch gekennzeichnet, dass**
die Gelenkkugel (3) aus einem ferromagnetischen Werkstoff besteht und der Feldgeber (4) in der Gelenkkugel (3) in einer Schicht (6) aus nicht magnetischem Material eingebettet ist.

2. Kugelgelenk nach Anspruch 1,
**dadurch gekennzeichnet, daß**
die beiden Pole des Feldgebers (4) in der Symmetrieachse des Kugelzapfens (2) angeordnet sind.

3. Kugelgelenk nach Anspruch 1 oder 2,
**dadurch gekennzeichnet, daß**
der Feldgeber (4) ein Stabmagnet ist.

4. Kugelgelenk nach einem der Ansprüche 1 bis 3,
**dadurch gekennzeichnet, daß**
der in der Gelenkkugel liegende Pol des Feldgebers (4) in Kontakt mit der ferromagnetischen Gelenkkugel (3) ist.

5. Kugelgelenk nach einem der Ansprüche 1 bis 4,
**dadurch gekennzeichnet, daß**
zumindest zwei Magnetfeldrichtungssensoren (5), die mit dem von dem Feldgeber (4) erzeugten Feld in Wechselwirkung stehen, an dem Kugelgelenkgehäuse (1) angeordnet sind, wobei die Meßbezugsachsen (x, y) der Magnetfeldrichtungssensoren (5) in einer Ebene liegen und nicht parallel zueinander verlaufen.

6. Kugelgelenk nach Anspruch 5,
**dadurch gekennzeichnet, daß**
die zwei Magnetfeldrichtungssensoren (5) auf einer Platte (7) in einem Winkel von 90° zueinander angeordnet sind.

7. Kugelgelenk nach Anspruch 6,
**dadurch gekennzeichnet, daß**
die Platte (7) an einem Verschlußdeckel (8) des Kugelgelenkgehäuses (1) angeordnet ist.

8. Kugelgelenk nach Anspruch 6 oder 7,
**dadurch gekennzeichnet, daß**
die Platte (7) senkrecht zur Mittelachse des Kugelzapfens angeordnet ist.

9. Kugelgelenk nach einem der Ansprüche 1 bis 8,
**dadurch gekennzeichnet, daß**
das Kugelgelenk als Fahrzeugniveaugeber in einem Fahrwerk eines Fahrzeuges eingesetzt ist, wobei das Kugelgelenkgehäuse (1) und der Kugelzapfen (2) zwischen dem Fahrzeugchassis und der Radaufhängung des Fahrzeuges angeordnet sind.

## Claims

1. Ball-and-socket joint with a ball-and-socket joint housing (1), a ball pin (2) mounted in the ball-and-socket joint housing (1), a bipolar field generator (4) disposed at the joint ball (3) of the ball pin (2) and at least one magnetic field direction sensor (5) which is disposed at the ball-and-socket joint housing (1) and interacts with the magnetic field generated by the field generator (4), wherein only one pole of the bipolar field generator (4) is disposed at the ball surface,
**characterised in that**
the joint ball (3) consists of a ferromagnetic material and the field generator (4) is embedded in the joint ball (3) in a layer (6) of non-magnetic material.

2. Ball-and-socket joint according to Claim 1,
**characterised in that**
the two poles of the field generator (4) are disposed on the axis of symmetry of the ball pin (2).

3. Ball-and-socket joint according to Claim 1 or 2,
**characterised in that**
the field generator (4) is a bar magnet.

4. Ball-and-socket joint according to any one of Claims 1 to 3,
**characterised in that**
the pole of the field generator (4) lying in the joint ball is in contact with the ferromagnetic joint ball (3).

5. Ball-and-socket joint according to any one of Claims 1 to 4,
**characterised in that**
at least two magnetic field direction sensors (5), which interact with the field generated by the field generator (4), are disposed at the ball-and-socket joint housing (1), wherein the measuring reference axes (x, y) of the magnetic field direction sensors (5) lie in one plane and do not extend parallel to one another.

6. Ball-and-socket joint according to Claim 5,
**characterised in that**
the two magnetic field direction sensors (5) are disposed on a plate (7) at an angle of 90° relative to one another.

7. Ball-and-socket joint according to Claim 6,
**characterised in that**
the plate (7) is disposed at a closing cover (8) of the ball-and-socket joint housing (1).

8. Ball-and-socket joint according to Claim 6 or 7,
**characterised in that**
the plate (7) is disposed perpendicularly to the centre axis of the ball pin.

9. Ball-and-socket joint according to any one of Claims 1 to 8,
**characterised in that**
the ball-and-socket joint is used as a vehicle level transducer in a running gear of a vehicle, wherein the ball-and-socket joint housing (1) and the ball pin (2) are disposed between the vehicle chassis and the wheel suspension of the vehicle.

## Revendications

1. Joint à rotule avec un boîtier de joint à rotule (1), un pivot sphérique (2) monté dans le boîtier de joint à rotule (1), un générateur de champ (4) bipolaire disposé sur la rotule de joint (3) du pivot sphérique (2), et au moins un capteur de direction de champ magnétique (5) disposé sur le boîtier (1) du joint à rotule, lequel capteur est en interaction avec le champ magnétique produit par le générateur de champ (4), seul un pôle du générateur de champ (4) bipolaire étant disposé à la surface de la rotule,
**caractérisé en ce que**
la rotule de joint (3) est constituée d'un matériau ferromagnétique et le générateur de champ (4) est noyé dans la rotule de joint (3) dans une couche (6) en un matériau non magnétique.

2. Joint à rotule selon la revendication 1,
**caractérisé en ce que**
les deux pôles du générateur de champ (4) sont disposés dans l'axe de symétrie du pivot sphérique (2).

3. Joint à rotule selon l'une quelconque des revendications 1 ou 2,
**caractérisé en ce que**
le générateur de champ (4) est un aimant en barre.

4. Joint à rotule selon l'une quelconque des revendications 1 à 3,
**caractérisé en ce que**
le pôle, situé dans la rotule de joint, du générateur de champ (4), est en contact avec la rotule de joint (3) ferromagnétique.

5. Joint à rotule selon l'une quelconque des revendications 1 à 4,
**caractérisé en ce que**
au moins deux capteurs de direction de champ magnétique (5), qui sont en interaction avec le champ produit par le générateur de champ (4), sont disposés sur le boîtier de joint à rotule (1), les axes de référence de mesure (x, y) des capteurs de direction de champ magnétique (5) se situant dans un plan et ne s'étendant pas parallèlement l'un à l'autre.

6. Joint à rotule selon la revendication 5,
**caractérisé en ce que**
les deux capteurs de direction de champ magnétique (5) sont disposés sur une plaque (7) suivant un angle de 90° l'un par rapport à l'autre.

7. Joint à rotule selon la revendication 6,
**caractérisé en ce que**
la plaque (7) est disposée sur un couvercle de fermeture (8) du boîtier de joint à rotule (1).

8. Joint à rotule selon l'une quelconque des revendications 6 ou 7,
**caractérisé en ce que**
la plaque (7) est disposée perpendiculairement à l'axe médian du pivot sphérique.

9. Joint à rotule selon l'une quelconque des revendications 1 à 8,
**caractérisé en ce que**
le joint à rotule est utilisé comme indicateur de niveau de véhicule dans le train roulant d'un véhicule, le boîtier de joint à rotule (1) et le pivot sphérique (2) étant disposés entre le châssis du véhicule et la suspension de roue du véhicule.
